# EUROPÄISCHE PATENTSCHRIFT

(11) **EP 1 377 799 B1**
(45) Veröffentlichungstag und Bekanntmachung des Hinweises auf die Patenterteilung: **02.01.2008**
(21) Anmeldenummer: 02735189.9
(22) Anmeldetag: 28.03.2002
(51) Int. Cl.: G01D 5/245, G01D 5/38

(54) **OPTISCHE POSITIONSMESSEINRICHTUNG**
OPTICAL POSITION MEASURING DEVICE
SYSTEME DE MESURE DE POSITION OPTIQUE

(30) Priorität: 03.04.2001 DE 10116599
(43) Veröffentlichungstag der Anmeldung: 07.01.2004
(73) Patentinhaber: Dr. Johannes Heidenhain GmbH, 83292 Traunreut (DE)
(72) Erfinder: BURGSCHAT, Reiner, 07745 Jena (DE); BÖHME, Janos, 07743 Jena (DE); MATZ, Manfred, 07743 Jena (DE)
(86) Internationale Anmeldenummer: PCT/EP2002/003475
(87) Internationale Veröffentlichungsnummer: WO 2002/082021

(56) Entgegenhaltungen:
- DE-A- 19 921 309

## Beschreibung

Die vorliegende Erfindung betrifft eine optische Positionsmesseinrichtung.

Aus der Publikation "Die neue Dimension in der Weg- und Winkelmesstechnik" von R. Burgschat in F & M 104, 1996, 10 S. 752 - 756 ist eine miniaturisierte Abtasteinheit für eine optische Positionsmesseinrichtung bekannt, die zur Auflicht-Abtastung einer inkrementalen Messteilung geeignet ist. Die Abtasteinheit umfasst u.a. eine auf einem Trägersubstrat platzierte Inkrementalsignal-Abtastanordnung. Die Inkrementalsignal-Abtastanordnung besteht im wesentlichen aus einem Fotodiodenarray mit einer Vielzahl von Inkrementalsignal-Detektorbereichen und einer zentral angeordenten Lichtquelle. Details zum Aufbau der Inkrementalsignal-Abtastanordnung finden sich auch in der DE 195 27 287 A1.
Neben dem ersten Fotodiodenarray zur Inkrementalsignalerzeugung ist ferner ein zweites Fotodiodenarray zur Referenzimpulserzeugung in Messrichtung beabstandet zum ersten -array angeordnet. Eine alternative Variante zur Erzeugung eines Referenzimpulssignales in einer derartigen Abtasteinheit ist ferner aus der DE 199 21 309 A1 bekannt.

Neben Positionsmesseinrichtungen mit lediglich einer einzigen Inkrementalsignal-Abtastanordnung auf Seiten der Abtasteinheit ist aus der Firmendruckschrift "Encoder-Kit L" der NUMERIK Jena GmbH mit dem Druckvermerk "Kit L-D-03/99", Publikation März 1999 ein Längenmesssystem bekannt, bei dem in Messrichtung deutlich beabstandet voneinander zwei derartige Inkrementalsignal-Abtastanordnungen auf einem gemeinsamen Trägersubstrat vorgesehen sind. Auf der Unterseite des Trägersubstrates, das der abgetasteten Messteilung zugewandt ist, ist ein durchlaufendes Abtastgitter für die beiden Inkrementalsignal-Abtastanordnungen angeordnet. Die Erzeugung phasenverschobener Teil-Inkrementalsignale aus der Vielzahl der Inkrementalsignal-Detektorbereiche erfolgt durch eine entsprechende Relativanordnung der Inkrementalsignal-Detektorbereiche zueinander.

In Systemen mit lediglich einer einzigen Inkrementalsignal-Abtastanordnung in der Abtasteinheit erweist sich nunmehr insbesondere die resultierende Empfindlichkeit gegenüber Verschmutzungen auf der Messteilung als nachteilig. Ursache hierfür ist ein relativ kleines Abtastfeld auf dem Maßstab. Wenn das Abtastfeld im Messbetrieb beispielsweise durch Schmutzpartikel belegt ist, sind Fehlmessungen die Folge.

Bei den ebenfalls oben erwähnten Systemen mit zwei beabstandeten Inkrementalsignal-Abtastanordnungen ist als nachteilig anzusehen, dass aufgrund der verschiedenen thermischen Längenausdehnungskoeffizienten des Maßstabes und der Abtasteinheit lediglich ein eingeschränkter Betriebstemperaturbereich zur Verfügung steht. Dies ist darauf zurückzuführen, dass aufgrund des großen Abstandes zwischen den Inkrementalsignal-Abtastanordnungen im Fall von temperaturbedingten Lageveränderungen nicht mehr sichergestellt ist, dass die vorgegebenen Phasenlagen auf den verschiedenen Detektorelementen gleich bleiben. Ferner resultiert im Fall von Verschmutzungen auf der Messteilung immer noch eine deutlicher Einfluss auf die Signalamplituden sowie auf den Signaloffset.

Aufgabe der vorliegenden Erfindung ist es daher, eine optische Positonsmesseinrichtung anzugeben, die sowohl möglichst miniaturisiert ausgebildet werden kann als auch eine zuverlässige Erzeugung von positionsabhängigen Abtastsignalen sicherstellt.
Diese Aufgabe wird gelöst durch eine optische Positionsmesseinrichtung mit den Merkmalen des Anspruches 1.

Vorteilhafte Ausführungsformen des erfindungsgemäßen optischen Positionsmesseinrichtung ergeben sich aus den Merkmalen, die in den von Anspruch 1 abhängigen Patentansprüchen aufgeführt sind.

Erfindungsgemäß werden nunmehr mindestens zwei Inkrementalsignal-Abtastanordnungen mit zwei Lichtquellen in Messrichtung unmittelbar benachbart auf einem transparenten Trägersubstrat angeordnet. Die Erzeugung der phasenverschobenen Teil-Inkrementalsignale aus den Inkrementalsignal-Detektorelementen erfolgt durch die räumlich definierte Zuordnung von Abtastgittern zu den einzelnen Detektorelementen. Hierbei sind die verscheidenen Felder mit Abtastgittern zwischen der Seite des Trägersubstrates, die der Messteilung abgewandt ist und den Inkrementalsignal-Detektorelementen angeordnet.

Als wesentlicher Vorteil der erfindungsgemäßen Positionsmesseinrichtung ist neben der äußerst kompakten Bauweise des Systems anzuführen, dass durch die Beleuchtung der abgestasteten Messteilung mittels mindestens zweier Lichtquellen und das Vorsehen einer größeren Anzahl von Inkrementalsignal-Detektorelementen nunmehr die Inkrementalsignale aus vielen Signalanteilen unterschiedlicher Abtaststellen auf der Messteilung gewonnen werden. Vereinzelte Schmutzpartikel auf der Messteilung haben demzufolge nur noch einen geringen Einfluss auf die Qualität der resultierenden Abtastsignale, insbesondere auf deren Amplitude. Aufgrund der Mehrfachbeleuchtung wird bei der Erzeugung der Abtastsignale ein wesentlich größeres Feld auf der Messteilung abgetastet, ohne dass es erforderlich ist, die einzelnen Inkrementalsignal-Abtastanordnungen deutlich größer dimensionieren zu müssen bzw. deutlich mehr Inkrementalsignal-Detektorelemente vorsehen zu müssen. Die Beleuchtung der Messteilung mittels mehrerer Lichtquellen ist somit letztlich die Voraussetzung für den äußerst kompakten Aufbau der Abtasteinheit.

Als weiterer Vorteil ist aufzuführen, dass aufgrund der Zuordnung eines geeigneten Abtastgitters zu jedem einzelnen Inkrementalsignal-Detektorelement nunmehr sichergestellt werden kann, dass das jeweilige Teil-Inkrementalsignal die korrekte Phasenlage aufweist. Im Fall der Verwendung eines gemeinsamen Abtastgitters für alle Inkrementalsignal-Detektorelemente ist dies aufgrund von Verzerrungseffekten im abgetasteten Streifenmuster nicht sichergestellt.

In einer vorteilhaften Ausführungsform der erfindungsgemäßen Positionsmesseinrichtung sind seitlich benachbart zu den mindestens zwei Inkrementalsignal-Abtastanordnungen jeweils noch mehrere Referenzimpuls-Detektorelemente angeordnet. Mithilfe der Referenzimpuls-Detektorelemente ist die Erzeugung von Referenzimpulssignalen an definierten Positionen entlang der Messstrecke möglich. Vorzugsweise ist auf jeder Seite im Bereich der Referenzimpuls-Detektorelemente ferner noch eine Lichtquelle angeordnet, so dass getrennte Lichtquellen bei der Abtastung der inkrementalen Messteilung und der Referenzmarkierungen vorliegen. Durch die Verwendung separater Lichtquellen zur Erzeugung der Inkrementalsignale und der Referenzimpulssignale können die entsprechenden Abtastspuren auf dem Maßstab auch weiter voneinander entfernt angeordnet werden, ohne dass wiederum die einzelnen Inkrementalsignal-Abtastanordnungen deutlich größer dimensioniert werden müssen bzw. deutlich mehr Inkrementalsignal-Detektorelemente vorgesehen werden müssen. Es ist derart auch ein insgesamt größerer seitlicher Versatz der Abtasteinheit gegenüber dem Maßstab tolerierbar ohne dass die Inkrementalsignal-Abtastanordnung zu groß bauend ausgebildet werden muss.

Wenn vor den zusätzlichen Lichtquellen im Bereich der Referenzimpuls-Detektorelemente ebenso wie vor den Lichtquellen in den Inkrementalsignal-Abtastanordnungen jeweils noch Sendegitter angeordnet werden, die Sendegittern vor den Lichtquellen der Inkrementalsignal-Abtastanordnungen entsprechen, so können wesentliche Strahlungsanteile dieser Lichtquellen auch zur Inkrementalsignalerzeugung verwendet werden. Die Abtastfläche auf der Messteilung vergrößert sich dadurch nochmals und trägt ebenfalls zur verringerten Schmutzempfindlichkeit bei.

Durch das Vorsehen jeweils mehrerer Referenzimpuls-Detektorelemente auf beiden Seiten der Inkrementalsignal-Abtastanordnungen resultiert ferner eine größere Flexibilität in Bezug auf die Erzeugung von Referenzimpulssignalen. So können etwa alle Referenzimpuls-Detektorelemente auf einer Seite zusammengeschaltet werden und damit zur Abtastung einer codierten Referenzmarke dienen; alternativ können zur Abtastung einfacher, strichförmiger Referenzmarken die inneren Referenzimpuls-Detektorelemente als Differenz-Fotoempänger verwendet werden, während die restlichen Referenzimpuls-Detektorelemente in bekannter Art und Weise als Kompensations-Detektorelemente eingesetzt werden.

Selbstverständlich ist es möglich, die erfindungsgemäße Positionsmesseinrichtung für lineare als auch für rotatorische Anwendungen auszulegen. Ebenso stellt es kein Problem dar, die erfindungsgemäße Positionsmesseinrichtung für verschiedene Mestteilungsperioden auszulegen.

Weitere Vorteile sowie Einzelheiten der vorliegenden Erfindung ergeben sich aus der nachfolgenden Beschreibung eines Ausführungsbeispieles anhand der beiliegenden Figuren.

Dabei zeigt
- Figur 1: eine schematisierte seitliche Ansicht eines Ausführungsbeispieles der erfindungsgemäßen Positionsmesseinrichtung;
- Figur 2: eine Draufsicht auf die abgetastete Messteilung aus Figur 1;
- Figur 3: eine Draufsicht auf die Detektorebene der Abtasteinheit aus Figur 1;
- Figur 4: eine Draufsicht auf das Trägersubstrat der Abtasteinheit aus Figur 1 in Verbindung mit den den Detektorelementen und Lichtquellen des Abtast-Optochips.

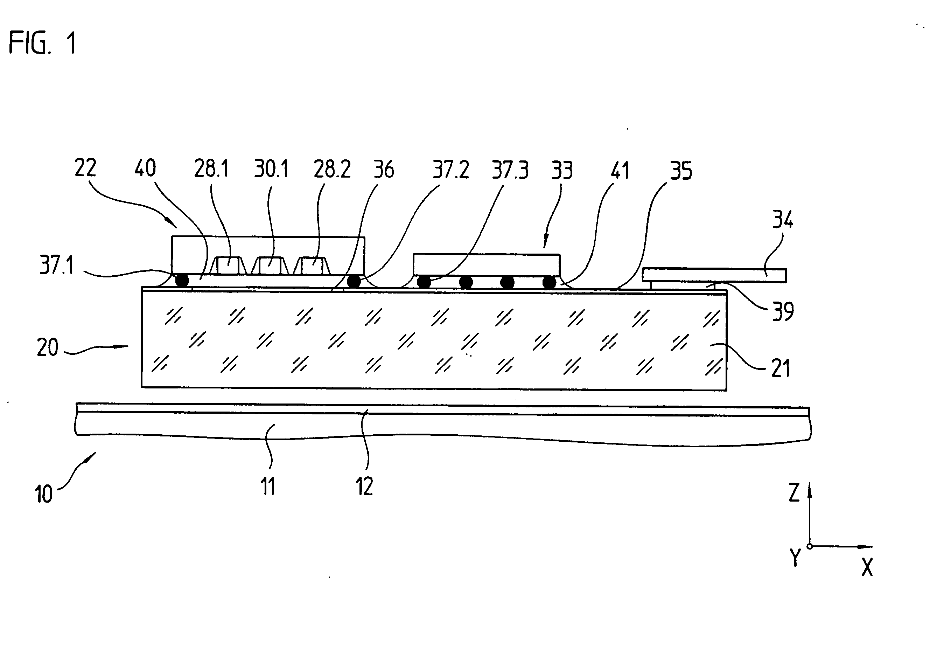

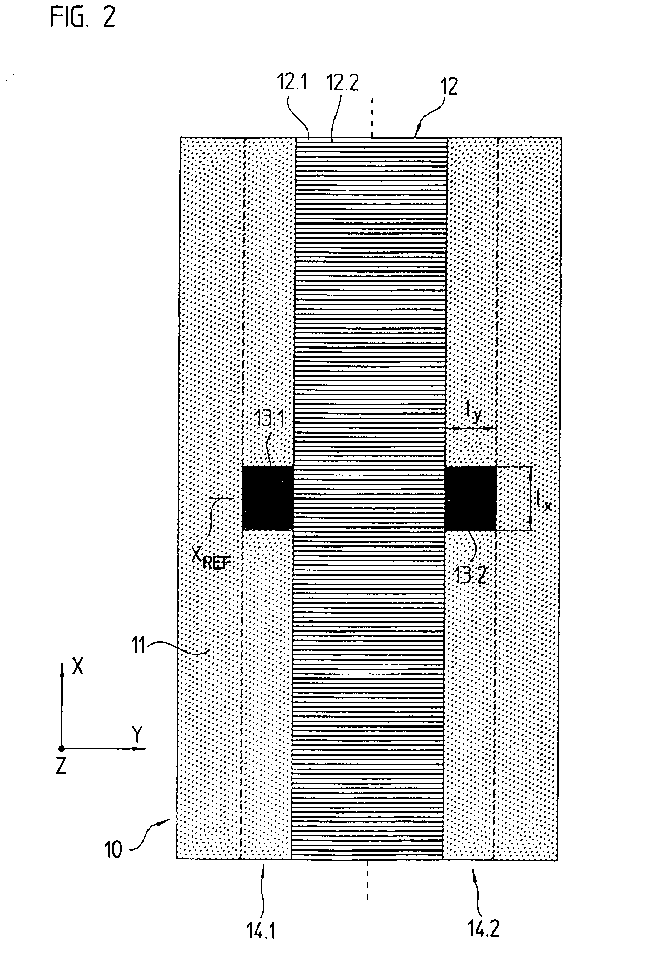

In Fig. 1 ist eine schematische Darstellung 1 eines Ausführungsbeispieles der erfindungsgemäßen optischen Positionsmesseinrichtung gezeigt. Diese umfasst neben einer Abtasteinheit 20 einen Maßstab 10 mit der abgetasteten inkrementalen Messteilung 12. Der verwendete Maßstab 10 ist in einer Draufsicht in Figur 2 dargestellt.

Die Abtasteinheit 20 und der Maßstab 10 mit der Messteilung 12 sind in der angegebenen Meßrichtung x relativ zueinander verschiebbar angeordnet; die Meßrichtung x ist damit in Figur 1 parallel zur Zeichenebene orientiert.

Das dargestellte Ausführungsbeispiel der optischen Positionsmesseinrichtung dient zur Erfassung linearer Relativbewegungen von Abtasteinheit 20 und Maßstab 10 bzw. Messteilung 12. Eine entsprechend ausgebildete Positionsmesseinrichtung und kann etwa in einer numerisch gesteuerten Werkzeugmaschine eingesetzt werden. Die von der Positionsmesseinrichtung erzeugten positionsabhängigen Abtastsignale werden zur Weiterverarbeitung an eine nicht dargestellte Auswerteeinheit übertragen, beispielsweise an eine numerische Werkzeugmaschinensteuerung.

Alternativ zur dargestellten Linear-Variante kann die erfindungsgemäße Positionsmesseinrichtung selbstverständlich auch zur Erfassung rotatorischer Relativbewegungen abgewandelt werden etc..

Der verwendete Maßstab 10 besteht im vorliegenden Ausführungsbeispiel aus einem Trägerkörper 11, auf dem mittig eine Spur mit der inkrementalen Messteilung 12 in Meßrichtung x angeordnet ist. In der inkrementalen Messteilung 12 erstrecken sich in Meßrichtung x periodisch angeordnete reflektierende Teilbereiche 12.1 und nicht-reflektierende Teilbereiche 12.2, deren Längsachsen jeweils in der angegebenen y-Richtung orientiert sind, d.h. senkrecht zur Meßrichtung x. Die Teilungsperiode TP_{M} der inkrementalen Messteilung 12 wird in einer möglichen Ausführungsform z.B. TP_{M} = 20µm gewählt. Als Trägerkörper 11 kann etwa ein Metallband dienen, auf dem im Bereich der inkrementalen Messteilung 12 die Teilbereiche 12.1, 12.2 mit den entsprechenden optischen Eigenschaften ausgebildet werden.

Die materialmäßige Ausbildung des Maßstabes 10 ist hierbei nicht erfindungswesentlich, d.h. der Maßstab 10 bzw. die inkrementale Messteilung 12 kann grundsätzlich auch alternativ zur angegebenen Ausführungsform realisiert werden.

Seitlich benachbart zur inkrementalen Messteilung 12 sind im gezeigten Beispiel desweiteren zwei Referenzmarkierungen 13.1, 13.2 an einer Referenzposition x_{REF} in zwei Referenzmarkierungsspuren 14.1, 14.2 angeordnet. Mit Hilfe der Referenzmarkierungen 13.1, 13.2 wird eine eindeutige Absolutposition entlang der Messstrecke definiert, über die der Absolutbezug der hochauflösenden Inkrementalmessung in bekannter Art und Weise hergestellt werden kann.

Selbstverständlich können auch noch an weiteren Stellen der Referenzmarkierungsspuren 14.1, 14.2 derartige Referenzmarkierungen 13.1, 13.2 paarweise an entsprechenden Referenzpositionen x_{REF} des Maßstabes 10 angebracht werden. Ebenso ist es möglich, auch sogenannte abstandscodierte Referenzmarkierungen vorzusehen etc..

Im dargestellten Ausführungsbeispiel weisen die beiden seitlich benachbart zur Inkrementalteilungsspur 12 angeordneten Referenzmarkierungen 13.1, 13.2 in Meßrichtung x eine Länge Iₓ = 500µm auf; die Länge I_{y} der Referenzmarkierungen 13.1, 13.2 in Strichrichtung der Inkrementalteilungsspur 12 wird beispielsweise I_{y} = 1 mm gewählt.

Die Referenzmarkierungen 13.1, 13.2 sind in diesem Beispiel als nicht-reflektierende Bereiche auf dem ansonsten reflektierenden Trägerkörper 11 ausgebildet.
Alternativ hierzu ist es auch möglich, die Anordnung reflektierender und nicht-reflektierender Bereiche umzukehren, so dass dann lediglich die Referenzmarkierungen 13.1, 13.2 reflektierend wirken, während der Rest der Referenzmarkierungsspuren 14.1, 14.2 nicht-reflektierend ausgelegt ist. Eine derartige Variante ist insofern vorteilhaft, als dadurch die Schmutzempfindlichkeit ber der Referenzimpulssignal-Erzeugung nochmals verringert werden kann, da eventuelle Schmutzpartikel auf dem Maßstab das einfallende Licht in der Regel nicht streuen und nicht gerichtet reflektieren.

Die Anordnung von zwei Referenzmarkierungen 13.1, 13.2 seitlich benachbart zur inkrementalen Messteilung 12 bietet Vorteile gegenüber der lediglich einseitigen Anordnung einer Referenzmarkierung. So ist damit praktisch ausgeschlossen, daß etwa eine lokale Verschmutzung, die ebenfalls optisch reflexmindernd wirkt und sich benachbart zur Inkrementalteilungsspur 12 befindet, als Referenzmarkierung interpretiert werden kann. In diesem Zusammenhang sei auch auf die bereits erwähnte DE 199 21 309 A1 verwiesen.

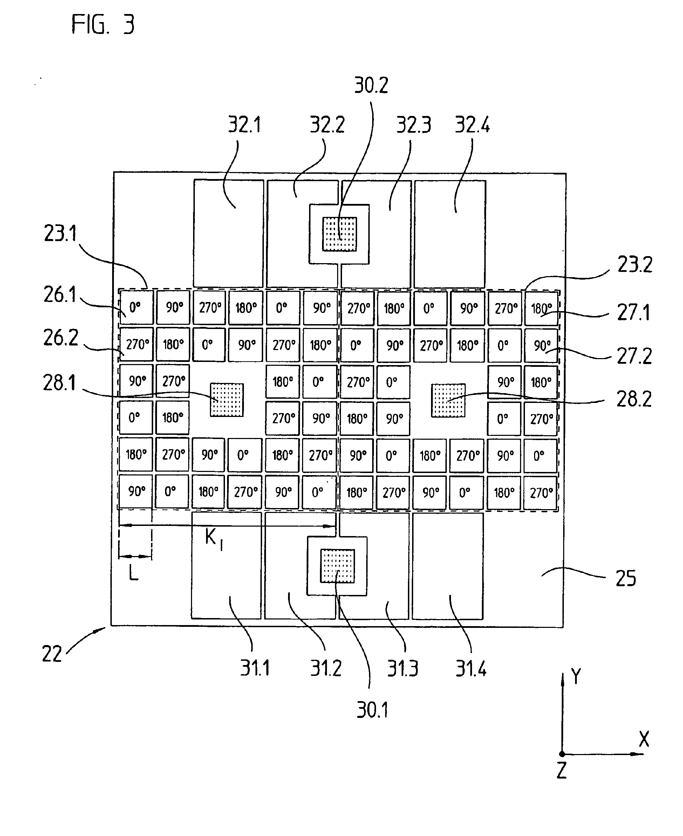

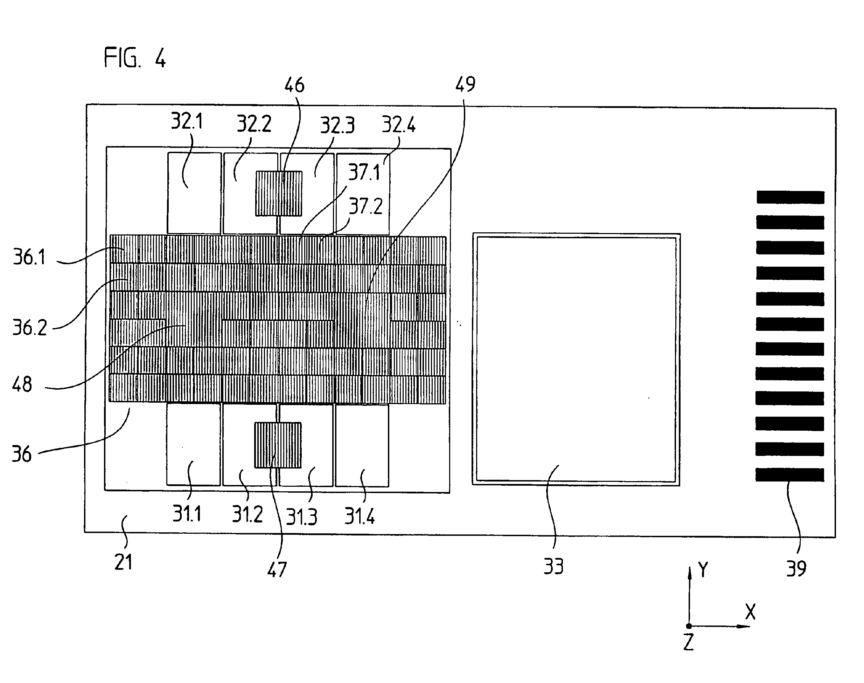

Auf Seiten der Abtasteinheit 20 der erfindungegmäßen Positionsmesseinrichtung sind in der schematischen Darstellung der Figur 1 eine Reihe wichtiger Komponenten erkennbar. Im Zusammenhang mit der Beschreibung der Abtasteinheit 20 sei an dieser Stelle auch auf die Figuren 3 und 4 verwiesen, die eine Ansicht der Detektorebene sowie eine Draufsicht auf das Trägersubstrat 21 der Abtasteinheit 20 in Verbindung mit weiteren Elementen der Abtasteinheit 20 zeigen.

In der Abtasteinheit 20 sind auf einem transparenten Trägersubstrat 21 die funktionsrelevanten Elemente zur Erzeugung der verschiebungsabhängigen Abtastsignale angeordnet. Das Trägersubstrat 21 besteht vorzugsweise aus einem geeigneten Borsilikatglas und weist in einer möglichen Ausführungsform eine Dicke von ca. 1mm auf; das Trägersubstrat 21 besitzt in diesem Beispiel einen rechteckförmigen Querschnitt mit den Abmessungen 8mm x 14mm.

Im vorliegenden Ausführungsbeispiel sind die nachfolgend beschriebenen Komponenten der Abtasteinheit 20 allesamt auf der Seite des Trägersubstrates 21 angeordnet, die der abzutastenden Messteilung 12 abgewandt ist. Im weiteren Verlauf der Beschreibung sei diese Seite auch als Oberseite bezeichnet, die der Messteilung zugewandte Seite sei als Unterseite bezeichnet. Auf der Oberseite des Trägersubstrates 21 sind im wesentlichen ein Abtast-Optochip 22 angeordnet, dessen Aufbau nachfolgend noch detailliert erläutert wird, sowie ein Signalverarbeitungsbaustein 33, der die über den Abtast-Optochip 22 generierten Abtastsignale geeignet weiterverarbeitet, bevor diese an eine geeignete Auswerteeeinheit übergeben werden. Der Signalverarbeitungsbaustein 33 ist hierbei vorzugsweise als geeigneter ASIC ausgebildet.

Im Bereich des Abtast-Optochips 22 sind auf dem Trägersubstrat 21 mehrere Bereiche mit Gitterstrukturen 36 ausgebildet, die verschiedenen Elementen des darüber angeordneten Abtast-Optochips 22 räumlich zugeordnet sind. Bei den verschiedenenen Gitterstrukturen 36, die im Detail in Figur 1 nicht erkennbar sind, handelt es sich um Abtastgitter und Sendegitter, die jeweils in definierter räumlicher Anordnung vor den optoelektronischen Inkrementalsignal-Detektorelementen und den verschiedenen Lichtquellen 28.1, 28.2, 30.1 des Abtast-Optochips 22 platziert sind. Bei den Gitterstrukturen handelt es sich beispielsweise um bekannte Amplitudengitter in Form periodisch angeordneter, lichtundurchlässiger Chrom-Stege auf dem transparenten Trägersubstrat 21.

Auf die Funktion und konkrete Ausbildung der Gitterstrukturen 36 wird im Verlauf der folgenden Beschreibung noch detailliert eingegangen.

Auf weiteren Bereichen der Oberseite des transparenten Trägersubstrates 21 ist ferner eine planare Leiterplattenstruktur 35 bzw. eine Einebenenverdrahtung aufgebracht, die in bekannter Art und Weise zur elektrischen Kontaktierung der verschiedenen optischen, elektrischen und optoelektronischen Bauelemente auf dem Trägersubstrat 21 dient. Insbesonder werden darüber also der Abtast-Optochips 22 und der Signalverarbeitungsbaustein 33 kontaktiert. Am Rand des Trägersubstrates 21 ist die planare Leiterplattenstruktur 35 elektrisch leitend mit einem flexiblen Leiterband 34 verbunden, beispielsweise in Form einer Lötverbindung mit Lötbumps 39. Über das flexible Leiterband 34 wird die Abtasteinheit 20 beispielsweise mit einer nachgeordneten Auswerteeinheit verbunden.

Alternativ zum flexiblen Leiterband 34 könnte an dieser Stelle auch ein Miniatursteckverbinder bzw. ein Foliensteckverbinder auf dem Trägersubstrat 21 vorgesehen werden.

Ebenso wäre es denkbar, den Signalverarbeitungsbaustein ähnlich zur bekannten Anordnung aus der DE 198 55 828 A1, in einer Ebene oberhalb des Abtast-Optochips anzuordnen und derart einen dreidimensionalen Aufbau der Abtasteinheit zu realisieren.

Der Abtast-Optochip 22 sowie der Signalverarbeitungsbaustein 33 sind auf dem Trägersubstrat 21 in bekannter Flip-Chip-Technologie befestigt; in Figur 1 sind einige der hierzu erforderlichen Kontaktierungspads 37.1, 37.2,.,.. aus einem SnPb-Lot oder einer bleifreien Lotlegierung im Raum zwischen der Oberseite des Trägersubstrates 21 und den jeweiligen Bauelementen 22, 33 erkennbar. Die Räume zwischen dem Trägersubstrat 21 und den darauf angeordneten Bauelementen 22, 33 sind desweiteren mit einem geeigneten Underfiller 40, 41 vergossen, so dass eine mechanische Stabilisierung des gesamten Aufbaus resultiert.

Anhand der Figur 3 sei nunmehr nachfolgend der erfindungsgemäße Aufbau des Abtast-Optochips 22 eines Ausführungsbeispieles näher erläutert, von dessen Detektorebene Figur 3 eine Draufsicht zeigt.
Im vorliegenden Beispiel sind auf Seiten des Abtast-Optochips 22 zwei in Messrichtung x unmittelbar benachbarte bzw. aneinander angrenzende Inkrementalsignal-Abtastanordnungen 23.1, 23.2 auf einem Optochip-Trägersubstrat 25 angeordnet, die eine etwa quadratische Form aufweisen. Die Inkrementalsignal-Abtastanordnungen 23.1, 23.2 umfassen jeweils eine zentral angeordnete Lichtquelle 28.1, 28.2, etwa eine geeignete LED, und mehrere um die Lichtquelle 28.1, 28.2 verteilt angeordnete Inkrementalsignal-Detektorelemente 26.1, 26.2; 27.1, 27.2, die z.B. als bekannte Photodioden ausgebildet sind. Über die verschiedenen Inkrementalsignal-Detektorelemente 26.1, 26.2; 27.1, 27.2 werden bei der Abtastung der Messteilung mehrere phasenverschobene Teil-Inkrementalsignale erzeugt; in Figur 3 bezeichnet die jedem Inkrementalsignal-Detektorelement 26.1, 26.2; 27.1, 27.2 zugeordnete Zahl die jeweilige relative Phasenlage des daraus resultierenden Teil-Inkrementalsignales. Im dargestellten Beispiel ist demzufolge die Erzeugung von vier verschiedenen Teil-Inkrementalsignalen vorgesehen, die die relativen Phasenlagen 0°, 90°, 180° und 270° aufweisen.

Grundsätzlich wird versuch, die verschiedenen Inkrementalsignal-Detektorelemente derart anzuordnen, dass die Summe der optischen Wege für die jeweiligen Phasenlagen möglichst gleich ist. Ferner sollten die Auswirkungen eventueller Verkippungen oder Verdrehungen der Abtasteinheit zum Maßstab auf die phasenverschiedenen Teil-Inkrementalsignale durch die Anordnung der Inkrementalsignal-Detektorelemente möglichst kompensiert werden.

Von den derart erzeugten, vier phasenverschobenen Teil-Inkrementalsignalen werden über die erwähnte Verdrahtungsschaltung 35 auf dem Trägersubstrat 21 phasengleiche Teil-Inkrementalsignale zusammengeschaltet und zur Weiterverarbeitung in bekannter Art und Weise zur Verfügung gestellt.

Eine Weiterverarbeitung kann z.B. in Form einer Signal-Verstärkung und Signal-Interpolation bereits im Signalverarbeitungsbaustein 33 der Abtasteinheit 20 erfolgen. Daneben sind selbstverständlich auch alternative Varianten der Signalverarbeitung in diesem -baustein 33 möglich.

Die Lichtquellen 28.1, 28.2 in den beiden Inkrementalsignal-Abtastanordnungen 23.1, 23.2 sind im dargestellten Beispiel jeweils in einer geeignet ausgebildeten Kavität des Optochip-Trägersubstrates 25 angeordnet, wie dies etwa in der seitlichen Ansicht in Figur 1 erkennbar ist. Die bedeutet, dass die Lichtquellen 28.1, 28.2 der beiden Inkrementalsignal-Abtastanordnungen 23.1, 23.2 koplanar zur Vorderfläche des Abtast-Optochips 22 angeordnet sind und die lichtemittierenden Vorderflächen der Lichtquellen 28.1, 28.2 nicht über diese Fläche hinausragen.

Im dargestellten Ausführungsbeispiel besteht jede der beiden Inkrementalsignal-Abtastanordnungen 23.1, 23.2 aus ingesamt Z_{GES} = 36 quadratischen Feldern, die jeweils eine Kantenlänge K_{F} = L besitzen; die Kanten der Felder sind parallel sowie rechtwinklig zur Messrichtung x orientiert. Im allgemeinen Fall weist eine Inkrementalsignal-Abtastanordnung 23.1, 23.2 innerhalb einer erfindungsgemäßen Positionsmesseinrichtung Z_{GES} = n * 4 Felder mit der Kantenlänge L auf, wobei n = 1,...6, 7,....; im dargestellten Fall gilt also n = 6.

Als Kantenlänge K_{I} für eine Inkrementalsignal-Abtastanordnung 23.1, 23.2 ergibt sich demzufolge K_{I} = n * L.

Innerhalb der Inkrementalsignal-Abtastanordnungen 23.1, 23.2 sind jeweils in einem zentralen Bereich von Z_{LQ} = 4 Feldern keine Detektorelemente vorgesehen wie in allen restlichen Feldern; anstelle der Detektorelemente ist in diesem zentralen Bereich jeweils eine Lichtquelle 28.1, 28.2 platziert. In den restlichen, umgebenden Feldern sind jeweils die Z_{DET} = Z_{GES} - Z_{LQ} = 32 Inkrementalsignal-Detektorelemente 26.1,, 26.2,...; 27.1, 27.2... angeordnet. Insgesamt umfassen die beiden Inkrementalsignal-Abtastanordnungen 23.1, 23.2 in diesem Beispiel demzufolge 64 Inkrementalsignal-Detektorelemente 26.1,, 26.2,...; 27.1, 27.2.... Die Vielzahl der eingesetzten Inkrementalsignal-Detektorelemente 26.1,, 26.2,...; 27.1, 27.2... trägt wesentlich zur Verschmutzungsunempfindlichkeit der erfindungsgemäßen Positionsmesseinrichtung bei.

Wie aus Figur 3 ferner ersichtlich ist, sind im dargestellten Ausführungsbeispiel beidseitig benachbart zu den beiden Inkrementalsignal-Abtastanordnungen 23.1, 23.2 desweiteren noch jeweils mehrere Referenzimpuls-Detektorelemente 31.1 - 31.4, 32.1 - 32.4 angeordnet. Die verschiedenen Referenzimpuls-Detektorelemente 31.1 - 31.4, 32.1 - 32.4 sind jeweils auf jeder Seite in Messrichtung x aufeinanderfolgend angeordnet. Im dargestellten Beispiel sind insgesamt jeweils vier derartige Referenzimpuls-Detektorelemente 31.1 - 31.4, 32.1 - 32.4 auf jeder Seite zur Erzeugung eines Referenzimpulsignales aus der Abtastung einer entsprechenden Referenzmarkierung auf dem Maßstab vorgesehen.
Jeder Gruppe von vier Referenzimpuls-Detektorelementen 31.1 - 31.4, 32.1 - 32.4 ist desweiteren jeweils eine separate Lichtquelle 30.1, 30.2 im Abtast-Optochip 22 zugeordnet; als Lichtquelle 30.1, 30.2 kann wiederum eine LED eingesetzt werden. Die entsprechende Lichtquelle 30.1, 30.2 ist jeweils in der Mitte der vier Referenzimpuls-Detektorelemente 31.1 - 31.4, 32.1 - 32.4 angeordnet, wozu die beiden zentralen Referenzimpuls-Detektorelemente 31.2, 31.3 bzw. 32.2, 32.3 eine entsprechende U-förmige Ausnehmung aufweisen.

Die Anordnung der beiden Lichtquellen 30.1, 30.2 im Bereich der Referenzimpuls-Detektorelemente 31.1 - 31.4; 32.1 - 32.4 erfolgt analog zu den Lichtquellen 28.1, 28.2 der beiden Inkrementalsignal-Abtastanordnungen 23.1, 23.2, d.h. die beiden Lichtquellen 30.1, 30.2 werden ebenso in Kavitäten des Optochip-Trägersubstrates 25 angeordnet etc..

Wie bereits oben angedeutet liefern die verschiedenen Inkrementalsignal-Detektorelemente 26.1" 26.2,...; 27.1, 27.2... bei der Abtastung der inkrementalen Messteilung periodische Teil-Inkrementalsignale mit den angegebenen relativen Phasenlagen. Im Gegensatz zum bekannten System aus der eingangs erwähnten Veröffentlichung erfolgt die Einstellung bzw. Erzeugung der verschiedenen Phasenlagen der inkrementalen Abtastsignale nunmehr nicht durch die Anordnung bzw. Platzierung der Inkrementalsignal-Detektorelemente 26.1,, 26.2,..; 27.1, 27.2... relativ zum abgetasteten periodischen Streifenmuster in der Detektionsebene, sondern durch Felder bzw. Bereiche mit Abtastgittern, die den einzelnen Inkrementalsignal-Detektorelementen 26.1" 26.2,...; 27.1, 27.2... definiert räumlich zugeordnet werden. Dies entsprechenden Felder mit Abtastgittern sind auf dem transparenten Trägersubstrat 21 der Abtasteinheit 20 angeordnet, wie dies aus der Figur 4 ersichtlich ist. Figur 4 stellt eine Draufsicht auf das Trägersubstrat 21 der Abtasteinheit dar, wobei zusätzlich noch weitere Komponenten wie Teile des Abtast-Optochips, des Signalverarbeitungsbausteines 33 und die Lötbumps 39 für das flexible Leiterband in dieser Darstellung erkennbar sind.

Deutlich aus Figur 4 ersichtlich ist die Anordnung von insgesamt 64 Feldern mit Abtastgittern 36.1, 36.2,..; 37.1, 37.2... auf dem Trägersubstrat 21, d.h. jedem Feld im Abtast-Optochip 22 mit einem Inkrementalsignal-Detektorelement ist auf dem Trägersubstrat 21 eindeutig ein Abtastgitter 36.1, 36.2,..; 37.1, 37.2... zugeordnet. Alle Abtastgitter 36.1, 36.2,..; 37.1, 37.2... in den verschiedenen Feldern besitzen im vorliegenden Beispiel die gleiche Teilungsperiode TP_{AG}, die dem Zweifachen der Teilungsperiode TP_{M} = 20µm der abgetasteten inkrementalen Messteilung auf dem Maßstab entspricht, d.h. TP_{AG} = 40µm.

Über die Relativlage der verschiedenen Abtastgitter 36.1, 36.2,..; 37.1, 37.2... zueinander wird die Phasenlage der erfassten Teil-Inkrementalsignale in den verschiedenen Inkrementalsignal-Detektorelementen eingestellt. Hierzu weisen die einzelnen Abtastgitter 36.1, 36.2,..; 37.1, 37.2... in den verschiedenen Feldern in bekannter Art und Weise dimensionierte Versatzabstände zueinander auf, die die Erzeugung der Teil-Inkrementalsignale mit den Phasenlagen 0°, 90°, 180° und 270° ermöglichen. So weisen etwa die Abtastgitter zur Erzeugung von Teil-Inkrementalsignalen mit den Phasenlagen 0° und 90° einen Abstand D₀₋₉₀ = N * TP_{M}/4 auf mit N = 1, 2, 3..; der Abstand D₀₋₁₈₀ zwischen dem 0°- Teil-Inkrementalsignal und dem 180°- Teil-Inkrementalsignal beträgt D₀₋₁₈₀ = N * TP_{M}/2, mit N = 1, 2, 3.. und der Abstand D₀₋₂₇₀ zwischen dem dem 0°- Teil-Inkrementalsignal und dem 270°-Teil-Inkrementalsignal beträgt D₀₋₂₇₀ = N * TP_{M}/2, mit N = 1, 2, 3... Selbstverständlich sind die Abstände bzw. Versatzabstände in Figur 4 nicht maßstäblich korrekt dargestellt.

Wie aus Figur 4 desweiteren ersichtlich ist, sind weitere Gitterstrukturen in Form von Sendegittern 46, 47, 48, 49 auf dem dem Trägersubstrat 21 im Bereich der insgesamt vier Lichtquellen angeordnet, d.h. sowohl vor den beiden Lichtquellen der Inkrementalsignal-Abtastanordnungen als auch vor den beiden Lichtquellen, die den Referenzimpuls-Detektorelementen zugeordnet sind. Die Teilungsperiode TP_{SG} aller vier Sendegitter 46 - 49 wird im vorliegenden Beispiel identisch gleich dem Zweifachen der Teilungsperiode TP_{M} der inkrementalen Messteilung gewählt und entspricht damit der Teilungsperiode TP_{AG} der Abtastgitter 36.1, 36.2..; 37.1, 37.2, d.h. TP_{SG} = 40µm.

Ingesamt stehen im erläuterten Ausführungsbeispiel der Abtasteinheit der erfindungsgemäßen Positionsmesseinrichtung damit vier Lichtquellen 28.1, 28.2, 30.1, 30.2 mit identischen vorgeordneten Sendegittern 46 - 49 zur Verfügung, die die Erzeugung eines hinreichend großen Abtastfeldes auf der Messteilung des Maßstabes gewährleisten und damit zur gewünschten Unempfindlichkeit gegenüber Verschmutzung beitragen.

Neben dem erläuterten Beispiel sind selbstverständlich auch weitere Abwandlungen der erfindungsgemäßen Positionsmesseinrichtung im Rahmen der vorliegenden Erfindung möglich.

So kann etwa vorgesehen werden, mehr als zwei Inkrementalsignal-Abtastanordnungen auf Seiten der Abtasteinheit anzuordnen. Ebenso könnte auch die Anordnung der Phasenlagen der Inkrementalsignal-Detektorelemente im Rahmen der vorliegenden Erfindung geeignet modifiziert werden. Desweiteren ist es möglich, auch alternative Querschnittsgeometrien für die Inkrementalsignal-Detektorelemente bzw. die Inkrementalsignal-Abtastanordnungen vorzusehen usw..

Desweiteren ist es grundsätzlich möglich, eine Abtasteinheit wie oben beschrieben auch zur Durchlicht-Abtastung einer entsprechenden Messteilung einzusetzen; in diesem Fall wären dann lediglich die Lichtquellen im Abtast-Optochip zu deaktivieren, die Anordnung der Detektorelemente könnte unverändert bleiben.

Ferner sei erwähnt, dass im Rahmen der vorliegenden Erfindung alternativ zur bisher genutzten Terminologie auch von einem einzigen Detektorarray in der Abtasteinheit mit einer Vielzahl von Detektorelementen gesprochen werden kann, wobei dem Detektorarray mehrere Lichtquellen zugeordnet werden etc..

## Patentansprüche

1. Optische Positionsmesseinrichtung, bestehend aus einer inkrementalen Messteilung (12) und einer relativ dazu in mindestens einer Messrichtung (x) beweglichen Abtasteinheit (20) mit einem transparenten Trägersubstrat (21), über die aus der Abtastung der Messteilung (12) positionsabhängige Inkrementalsignale erzeugbar sind, **dadurch gekennzeichnet, dass** die Abtasteinheit (20) folgende Komponenten umfasst:
- mindestens zwei in Messrichtung (x) angeordnete Inkrementalsignal-Abtastanordnungen (23.1, 23.2), welche jeweils eine Lichtquelle (28.1, 28.2) und mehrere um die Lichtquelle (28.1, 28.2) verteilt angeordnete Inkrementalsignal-Detektorelemente (26.1, 26.2,..; 27.1, 27.2,...) umfassen, über die Teil-Inkrementalsignale aus der Abtastung der Messteilung (12) erzeugbar sind, wobei die mindestens zwei Inkrementalsignal-Abtastanordnungen (23.1, 23.2) auf der zur Messteilung (12) abgewandten Seite des Trägersubstrates (21) angeordnet sind,
- mehrere Felder mit Abtastgittern (36.1, 36.2..; 37.1, 37.2,..), die jeweils den Inkrementalsignal-Detektorelementen (26.1, 26.2,..; 27.1, 27.2,...) räumlich zugeordnet und zwischen den Inkrementalsignal-Abtastanordnungen (23.1, 23.2) und dem Trägersubstrat (21) angeordnet sind, wobei die verschiedenen Abtastgitter (36.1, 36.2..; 37.1, 37.2,..) derart angeordnet sind, dass aus den verschiedenen Inkrementalsignal-Detektorelementen (26.1, 26.2,..; 27.1, 27.2,...) Teil-Inkrementalsignale mit vorgegebenen Phasenbeziehungen erzeugbar sind.

2. Optische Positionsmesseinrichtung nach Anspruch 1, wobei die verschiedenen Abtastgitter 36.1, 36.2..; 37.1, 37.2,...) auf der Seite des Trägersubstrates (21) angeordnet sind, die abgewandt zur Messteilung (12) orientiert ist.

3. Optische Positionsmesseinrichtung nach Anspruch 1, wobei die Inkrementalsignal-Abtastanordnungen (23.1, 23.2) jeweils aus n * 4 Feldern bestehen, mit n = 1, 2, 3......

4. Optische Positionsmesseinrichtung nach Anspruch 1, wobei
- jedes Feld die Kantenlänge L aufweist und
- die Kanten der quadratischen Felder parallel sowie rechtwinklig zur Messrichtung (x) orientiert sind.

5. Optische Positionsmesseinrichtung nach Anspruch 4, wobei jede Inkrementalsignal-Abtastanordnung (23.1, 23.2) eine quadratische Form aufweist und die Kantenlänge K_{I} = n * L besitzt.

6. Optische Positionsmesseinrichtung nach Anspruch 3, wobei in der Mitte der Inkrementalsignal-Abtastanordnung (23.1, 23.2) im Bereich von Z_{LQ} = k * 4 Feldern die Lichtquelle (28.1, 28.2) angeordnet ist, die von Z_{DET} = n² - (k *4) Feldern mit Inkrementalsignal-Detektorelementen (26.1, 26.2,...; 27.1, 27.2,...) umgeben ist.

7. Optische Positionsmesseinrichtung nach Anspruch 1, wobei die Inkrementalsignal-Abtastanordnungen (23.1, 23.2) in Messrichtung (x) unmittelbar aneinander angrenzend angeordnet sind.

8. Optische Positionsmesseinrichtung nach Anspruch 1, wobei die Abtastgitter (36.1, 36.2,..; 37.1, 37.2,..) jeweils die gleiche Teilungsperiode TP_{AG} aufweisen.

9. Optische Positionsmesseinrichtung nach Anspruch 8, wobei die Abtastgitter (36.1, 36.2,..; 37.1, 37.2,..), die phasenverschiedenen Inkrementalsignal-Detektorbereichen (26.1, 26.2,..; 27.1, 27.2,..) zugeordnet sind, jeweils einen definierten Versatz (D₀₋₉₀, D₀₋₁₈₀, D₀₋₂₇₀,) in Messrichtung (x) zueinander aufweisen.

10. Optische Positionsmesseinrichtung nach Anspruch 9, wobei die verschiedenen Abtastgitter (36.1, 36.2,..; 37.1, 37.2,..) pro Inkrementalsignal-Abtastanordnung (23.1, 23,.2) derart relativ versetzt angeordnet sind, dass jeweils eine Vielzahl von vier phasenverschiedenen Teil-Inkrementalsignalen resultiert.

11. Optische Positionmesseinrichtung nach Anspruch 1, wobei phasengleiche Teil-Inkrementalsignale aller Inkrementalsignal-Abtastanordnungen (23.1, 23.2) zusammengeschaltet sind.

12. Optische Positionmesseinrichtung nach Anspruch 1, wobei auf dem Trägersubstrat (21) im Bereich der Lichtquellen (28.1, 28.2) der Inkrementalsignal-Abtastanordnungen (23.1, 23.2) Sendegitter (48, 49) angeordnet sind.

13. Optische Positionmesseinrichtung nach Anspruch 12, wobei die Teilungsperioden (TPAG, TP_{SG}) der Abtastgitter (36.1, 36.2,..; 37.1, 37.2,..) und der Sendegitter (48, 49) identisch gewählt sind.

14. Optische Positionsmesseinrichtung nach Anspruch 1, wobei senkrecht zur Messrichtung (x) und beidseitig benachbart zu den mindestens zwei Inkrementalsignal-Abtastanordnungen (23.1, 23.2) jeweils mehrere Referenzimpuls-Detektorelemente (31.1,..., 31.4; 32.1,..., 32.4) in Messrichtung (x) aufeinanderfolgend angeordnet sind.

15. Optische Positionsmesseinrichtung nach Anspruch 14, wobei im Bereich der Referenzimpuls-Detektorelemente (31.1,..., 31.4; 32.1,..., 32.4) desweiteren jeweils eine Lichtquelle (30.1, 30.2) angeordnet ist.

16. Optische Positionsmesseinrichtung nach Anspruch 14, wobei jeweils vier Referenzimpuls-Detektorelemente (31.1,..., 31.4; 32.1,..., 32.4) beidseitig benachbart zu den mindestens zwei Inkrementalsignal-Abtastanordnungen (23.1, 23.2) angeordnet sind.

17. Optische Positionsmesseinrichtung nach Anspruch 15, wobei auf dem Trägersubstrat (21) im Bereich der Lichtquellen (30.1, 30.2) der Referenzimpuls-Detektorelemente (31.1,..., 31.4; 32.1,..., 32.4) Sendegitter (48, 49) angeordnet sind.

18. Optische Positionsmesseinrichtung nach Anspruch 12 und 17, wobei die Sendegitter (46 - 49) jeweils die gleiche Teilungsperiode (TP_{SG}) besitzen.

19. Optische Positionsmesseinrichtung nach Anspruch 1, wobei auf der der Messteilung (12) abgewandten Seite des Trägersubstrates (21) ferner mindestens ein Signalverarbeitungsbaustein (33) angeordnet ist.

20. Optische Positionsmesseinrichtung nach Anspruch 1, wobei auf der der Messteilung (12) abgewandten Seite des Trägersubstrates (21) ferner eine planare Leiterplattenstruktur (35) aufgebracht ist, um die verschiedenen Bauelemente auf dem Trägersubstrat (21) elektrisch leitend zu kontaktieren.

## Claims

1. Optical position measuring device, comprising an incremental measuring gradation (12) and a scanning unit (20) which can be moved relative thereto in at least one measuring direction (x) with a transparent carrier substrate (21), via which scanning unit position-dependent incremental signals can be generated from the scanning of the measuring gradation (12), **characterised in that** the scanning unit (20) comprises the following components:
- at least two incremental signal scanning arrangements (23.1, 23.2) which are disposed in the measuring direction (x) and comprise respectively a light source (28.1, 28.2) and a plurality of incremental signal detector elements (26.1, 26.2, ...; 27.1, 27.2, ...) disposed distributed about the light source (28.1, 28.2), via which partial incremental signals can be generated from the scanning of the measuring gradation (12), the at least two incremental signal scanning arrangements (23.1, 23.2) being disposed on the side of the carrier substrate (21) which is orientated away from the measuring gradation (12),
- a plurality of fields with scanning gratings (36.1, 36.2, ...; 37.1, 37.2, ...), which respectively are assigned spatially to the incremental signal detector elements (26.1, 26.2, ...; 27.1, 27.2, ...) and disposed between the incremental signal scanning arrangements (23.1, 23.2) and the carrier substrate (21), the different scanning gratings (36.1, 36.2, ...; 37.1, 37.2, ...) being disposed such that partial incremental signals with prescribed phase relationships can be produced from the different incremental signal detector elements (26.1, 26.2, ...; 27.1, 27.2, ...).

2. Optical position measuring device according to claim 1, the different scanning gratings (36.1, 36.2, ... ; 37.1, 37.2, ...) being disposed on the side of the carrier substrate (21) which is orientated away from the measuring gradation (12).

3. Optical position measuring device according to claim 1, the incremental signal scanning arrangements (23.1, 23.2) respectively comprising n * 4 fields, with n = 1, 2, 3, ...

4. Optical position measuring device according to claim 1,
- each field having the edge length L and
- the edges of the square fields being orientated parallel and at a right-angle to the measuring direction (x).

5. Optical position measuring device according to claim 4, each incremental signal scanning arrangement (23.1, 23.2) having a square shape and having the edge length K₁ =n * L.

6. Optical position measuring device according to claim 3, the light source (28.1, 28.2) being disposed in the centre of the incremental signal scanning arrangement (23.1, 23.2) in the region of Z_{LQ} = k * 4 fields, said light source being surrounded by Z_{DET} = n² - (k * 4) fields with incremental signal detector elements (26.1, 26.2, ...; 27.1, 27.2, ...).

7. Optical position measuring device according to claim 1, the incremental signal scanning arrangements (23.1, 23.2) being disposed directly abutting one on the other in the measuring direction (x).

8. Optical position measuring device according to claim 1, the scanning gratings (36.1, 36.2, ...; 37.1, 37.2, ...) respectively having the same gradation period TP_{AG}.

9. Optical position measuring device according to claim 8, the scanning gratings (36.1, 36.2, ...; 37.1, 37.2, ...) which are assigned to different-phase incremental signal detector regions (26.1, 26.2, ...; 27.1, 27.2, ...) respectively having a defined offset (D₀₋₉₀, D₀₋₁₈₀, D₀₋₂₇₀,) relative to each other in the measuring direction (x).

10. Optical position measuring device according to claim 9, the different scanning gratings (36.1, 36.2, ...; 37.1, 37.2, ...) being disposed relatively offset per incremental signal scanning arrangement (23.1, 23.2) such that respectively a multiplicity of four different-phase partial incremental signals results.

11. Optical position measuring device according to claim 1, in-phase partial incremental signals of all the incremental signal scanning arrangements (23.1, 23.2) being connected together.

12. Optical position measuring device according to claim 1, transmitting gratings (48, 49) being disposed on the carrier substrate (21) in the region of the light sources (28.1, 28.2) of the incremental signal scanning arrangements (23.1, 23.2).

13. Optical position measuring device according to claim 12, the gradation periods (TPAG, TP_{SG}) of the scanning gratings (36.1, 36.2, ...; 37.1, 37.2, ...) and of the transmitting gratings (48, 49) being chosen to be identical.

14. Optical position measuring device according to claim 1, a plurality of reference impulse detector elements (31.1, ..., 31.4; 32.1, ..., 32.4) respectively being disposed successively in the measuring direction (x), perpendicular to the measuring direction (x) and on both sides, adjacent to the at least two incremental signal scanning arrangements (23.1, 23.2).

15. Optical position measuring device according to claim 14, furthermore respectively one light source (30.1, 30.2) being disposed in the region of the reference impulse detector elements (31.1, ..., 31.4; 32.1, ... 32.4).

16. Optical position measuring device according to claim 14, four reference impulse detector elements (31.1, ..., 31.4; 32.1, ..., 32.4) respectively being disposed on both sides adjacent to the at least two incremental signal scanning arrangements (23.1, 23.2).

17. Optical position measuring device according to claim 15, transmitting gratings (48, 49) being disposed on the carrier substrate (21) in the region of the light sources (30.1, 30.2) of the reference impulse detector elements (31.1, ..., 31.4; 32.1, ... , 32.4).

18. Optical position measuring device according to claim 12 and 17, the transmitting gratings (46 - 49) respectively having the same gradation period (TP_{SG}).

19. Optical position measuring device according to claim 1, furthermore at least one signal processing component (33) being disposed on the side of the carrier substrate (21) which is orientated away from the measuring gradation (12).

20. Optical position measuring device according to claim 1, furthermore a planar printed circuit board structure (35) being applied on the side of the carrier substrate (21) which is orientated away from the measuring gradation (12), in order to contact the different components on the carrier substrate (21) in an electrically conductive manner.

## Revendications

1. Système optique de mesure de position, composé d'une graduation de mesure (12) incrémentielle et d'une unité d'exploration (20) mobile selon la direction de mesure (x), qui présente un substrat porteur (21) transparent et qui peut produire des signaux incrémentiels en fonction de la position résultant de l'exploration de la graduation de mesure, **caractérisé en ce que** l'unité d'exploration (20) comprend les composants suivants :
- au moins deux dispositifs d'exploration à signal incrémentiel (23.1, 23.2) disposés selon la direction de mesure (x), comprenant chacun une source lumineuse (28.1, 28.2) et plusieurs éléments de détection à signal incrémentiel (26.1, 26.2,... ; 27.1, 27.2,...) répartis autour de la source lumineuse (28.1, 28.2) et par lesquels peuvent être produits les signaux incrémentiels élémentaires résultant de l'exploration de la graduation de mesure (12), les dispositifs d'exploration (23.2, 23.2) au nombre de deux au moins étant montés sur le côté du substrat porteur (21) qui est éloigné de la graduation de mesure (12,
- plusieurs champs avec des grilles d'exploration (36.1, 36.2,... ; 37.1, 37.2,...) qui sont associées chacune dans l'espace aux éléments de détection (26.1, 26.2,... ; 27.1, 27.2,...) et qui sont disposées entre les dispositifs d'exploration (23.1, 23.2) et le substrat porteur (21), les différentes grilles (36.1, 36.2,... ; 37.1, 37.2,...) étant disposées de manière qu'à partir des éléments de détection (26.1, 26.2,... ; 27.1, 27.2,...) des signaux incrémentiels élémentaires peuvent être produits avec des relations de phases prédéfinies.

2. Système optique de mesure de position selon la revendication 1, **caractérisé en ce que** les différentes grilles d'exploration (36.1, 36.2,... ; 37.1, 37.2,...) sont disposées sur le côté du substrat porteur (21), qui est orienté à l'opposé de la graduation de mesure (12).

3. Système optique de mesure de position selon la revendication 1, **caractérisé en ce que** les dispositifs d'exploration (23.1, 23.2) sont composés chacun de 4*n champs avec n = 1, 2, 3 etc.

4. Système optique de mesure de position selon la revendication 1, **caractérisé en ce que**
- chaque champ présente un bord de longueur L,
- les bords des champs carrés sont parallèles et perpendiculaires respectivement à la direction de mesure (x).

5. Système optique de mesure de position selon la revendication 4, **caractérisé en ce que** chaque dispositif d'exploration à signal incrémentiel (23.1, 23.2) a la forme d'un carré donc le côté a une longueur K₁ = n*L.

6. Système optique de mesure de position selon la revendication 3, **caractérisé en ce qu'**au milieu du dispositif d'exploration à signal incrémental (23.1, 23.2), dans la zone de Z_{LQ} = k*4 champs, se trouve la source lumineuse qui est entourée par Z_{DET} = n² - (k*4) champs avec des éléments de détection à signal incrémentiel (26.1, 26.2,... ; 27.1, 27.2,...).

7. Système optique de mesure de position selon la revendication 1, **caractérisé en ce que** les dispositifs d'exploration à signal incrémentiel (23.1, 23.2) sont disposés directement côte à côte selon la direction de mesure (x).

8. Système optique de mesure de position selon la revendication 1, **caractérisé en ce que** les grilles d'exploration (36.1, 36.2,... ; 37.1, 37.2,...) présentent chacune la même période de graduation TP_{AG}.

9. Système optique de mesure de position selon la revendication 8, **caractérisé en ce que** les grilles d'exploration (36.1, 36.2,... ; 37.1, 37.2,...) qui sont associées aux zones de détection (26.1, 26.2,... ; 27.1, 27.2,...) à phases différentes, présentent chacune un décalage différent (D₀₋₉₀, D₀₋₁₈₀, D₀₋₂₇₀) dans la direction de mesure (x).

10. Système optique de mesure de position selon la revendication 9, **caractérisé en ce que** les différentes grilles d'exploration (36.1, 36.2,... ; 37.1, 37.2,...) sont décalées par rapport à chaque dispositif d'exploration (23.1, 23.2) de manière qu'il en résulte chaque fois une multiplicité de quatre signaux incrémentiels élémentaires déphasés.

11. Système optique de mesure de position selon la revendication 1, **caractérisé en ce que** les signaux incrémentiels élémentaires en phase, provenant des dispositifs d'exploration à signal incrémentiel (23.1, 23.2) sont interconnectés.

12. Système optique de mesure de position selon la revendication 1, **caractérisé en ce que** sur le substrat porteur, dans la zone des sources lumineuses (28.1, 28.2) des dispositifs d'exploration à signal incrémentiel (23.1, 23.2) sont disposées des grilles émettrices (48, 49).

13. Système optique de mesure de position selon la revendication 12, **caractérisé en ce que** les périodes de graduation (TPAG, TP_{SG}) des grilles d'exploration (36.1, 36.2,... ; 37.1, 37.2,...) et des grilles émettrices (48, 49) sont choisies identiques.

14. Système optique de mesure de position selon la revendication 1, **caractérisé en ce que** perpendiculairement à la direction de mesure (x), et des deux côtés à proximité des dispositifs d'exploration à signal incrémentiel (23.1, 23.2) au nombre de deux au moins, sont disposés chaque fois plusieurs éléments de détection d'impulsions de référence (31.1,..., 31.4 ; 32.1,..., 32.4) qui se suivent selon la direction de mesure (x).

15. Système optique de mesure de position selon la revendication 14, **caractérisé en ce que** dans chaque zone de détecteur d'impulsions de référence (31.1,..., 31.4 ; 32.1,..., 32.4) se trouve de plus une source lumineuse (30.1, 30.2).

16. Système optique de mesure de position selon la revendication 14, **caractérisé en ce que** chaque fois quatre éléments de détection d'impulsions de référence (31.1,..., 31.4 ; 32.1,..., 32.4) sont disposés des deux côtés, au voisinage des dispositifs d'exploration à signal incrémentiel (23.1, 23.2) au nombre de deux au moins.

17. Système optique de mesure de position selon la revendication 15, **caractérisé en ce que** sur le substrat porteur (21), dans la zone des sources lumineuses (30.1, 30.2) des éléments de détection d'impulsions de référence (31.1,..., 31.4 ; 32.1,..., 32.4), sont disposées des grilles émettrices (48, 49).

18. Système optique de mesure de position selon la revendication 12 et 17, **caractérisé en ce que** les grilles émettrices (46 - 49) présentent toutes la même période de graduation (TP_{SG}).

19. Système optique de mesure de position selon la revendication 1, **caractérisé en ce que** sur le côté du substrat porteur (21) éloigné de la graduation de mesure (12) se trouve de plus une unité de traitement de signal.

20. Système optique de mesure de position selon la revendication 1, **caractérisé en ce que** sur le côté du substrat porteur (21) éloigné de la graduation de mesure (12) se trouve de plus une structure de circuit imprimé (35) plane, pour assurer le contact électrique des différents composants sur le substrat porteur (21).
